# EUROPÄISCHE PATENTSCHRIFT

(11) **EP 3 204 278 B1**
(45) Veröffentlichungstag und Bekanntmachung des Hinweises auf die Patenterteilung: **07.08.2019**
(21) Anmeldenummer: 15775449.0
(22) Anmeldetag: 06.10.2015
(51) Int. Cl.: B62D 15/02, B60R 1/00

(54) **UNFALLVERMEIDUNG MIT DEM NACHFOLGENDEN VERKEHR BEI EINEM AUTOMATISIERTEN EINPARKVORGANG IN EINER QUERPARKLÜCKE**
ACCIDENT PREVENTION WITH THE FOLLOWING TRAFFIC DURING AN AUTOMATED PARKING PROCEDURE IN A TRANSVERSE PARKING SPACE
PROCÉDÉ PERMETTANT D'ÉVITER DES ACCIDENTS AVEC LES VÉHICULES QUI SUIVENT LORS D'UN PROCESSUS DE STATIONNEMENT AUTOMATISÉ DANS UNE PLACE DE STATIONNEMENT EN ÉPI

(30) Priorität: 07.10.2014 DE 102014220298
(43) Veröffentlichungstag der Anmeldung: 16.08.2017
(73) Patentinhaber: Bayerische Motoren Werke Aktiengesellschaft, 80809 München (DE)
(72) Erfinder: SARIHAN, Izden, 81369 München (DE); COESTER, Constantin, 80802 München (DE); GOLDMANN, Thomas, 95445 Bayreuth (DE)
(86) Internationale Anmeldenummer: PCT/EP2015/073065
(87) Internationale Veröffentlichungsnummer: WO 2016/055487

(56) Entgegenhaltungen:
- DE-A1-102010 030 208
- DE-A1-102010 041 902
- DE-A1-102010 056 064
- DE-A1-102011 084 943
- DE-A1-102011 086 245
- DE-A1-102011 122 421
- US-A1- 2010 253 780

## Beschreibung

Die Erfindung betrifft Parkassistenzsysteme mit zumindest automatischer Querführung für Kraftfahrzeuge, insbesondere für Personenkraftwagen.

Bei Parkassistenzsystemen mit automatischer Querführung wird die Lenkung des Kraftfahrzeugs während des Einparkvorgangs vom System übernommen. Die Längsführung muss der Fahrer durch entsprechendes Beschleunigen und Bremsen selbst übernehmen. Bei Parkassistenzsystemen mit automatischer Querführung und automatischer Längsführung wird auch die Aufgabe der Längsführung je nach Automatisierungsgrad der Längsführung teilweise oder vollständig vom Parkassistenzsystem übernommen. Bei Parkassistenzsystem mit automatischer Querführung und vollautomatischer Längsführung werden beispielsweise die Lenkung, die Bremse, der Fahrzeugantrieb und die Fahrtrichtung (Vorwärts- oder Rückwärtsfahrt) vom Parkassistenzsystem gesteuert. Bei derartigen Parkassistenzsystemen hat der Fahrer beispielsweise die Möglichkeit, per Betätigung eines Bedienelements, beispielsweise einer Taste, das Fahrzeug selbständig einparken und optional ausparken lassen zu können.

Ein beispielhaftes Parkassistenzsystem mit automatischer Querführung und vollautomatischer Längsführung ist in der Druckschrift "Parkassistent mit Längs- und Querführung", Dirk Ahrens, 5. Tagung Fahrerassistenz der TU München, München, 2012 beschrieben, die beispielsweise unter dem Link "http://mediatum.ub.tum.de/doc/1142099/1142099.pdf" im Internet abrufbar ist. Weitere beispielhafte Parkassistenzsysteme sind in den Druckschriften DE 10 2010 041902 A1, DE 10 2011 084943 A1, DE 10 2011 122421 A1, US 2010/253780 A1, DE 10 2011 086245 A1, DE 10 2010 056064 A1 und DE 10 2010 030208 A1 beschrieben. Das Dokument DE 10 2010 041902 A1 ist als nächstliegender Stand der Technik nach dem Oberbegriff der Ansprüche 1, 7, 13 und 14 zu sehen.

Derartige Parkassistenzsystem ermöglichen das Einparken in Längsparklücken und/oder Querparklücken.

Die Erfindung betrifft Parkassistenzsystem mit zumindest automatischer Querführung zum Einparken in Querparklücken.

Beispielsweise wird bei derartigen Parkassistenzsystemen zum Einparken in Querparklücken beim manuellen Vorbeifahren an quer zur Straße parkenden Kraftfahrzeugen automatisch eine Querparklücke zwischen den in Querrichtung parkenden Fahrzeugen mittels einer Ultraschallsensorik vermessen. Basierend auf der Vermessung der Parklücke wird vor der Durchführung des Einparkmanövers eine Einparktrajektorie geplant, auf der das Fahrzeug rückwärts mit automatischer Querführung und gegebenenfalls automatischer Längsführung in einem oder mehreren Zügen in die Längsparklücke einparkt. Sofern bei der Trajektorienplanung festgestellt wird, dass mit einem einzigen Einparkzug in Rückwärtsrichtung nicht die Kriterien für eine zulässige Parkendlage (beispielsweise in Bezug auf den Abstand zu den die Querparklücke begrenzenden Fahrzeugen und in Bezug auf die Verdrehung zwischen der Fahrzeugausrichtung und der Ausrichtung der Parklücke) erfüllt werden können, besteht ein Bedarf für einen nachfolgenden Korrekturzug in Vorwärtsrichtung mit einem nachfolgenden Einparkzug in Rückrichtung; es können aber auch mehrere Korrekturzüge in Vorwärtsrichtung mit jeweils nachfolgendem Einparkzug in Rückrichtung erforderlich sein.

Bei den gegebenenfalls notwendigen Korrekturzügen wird das Fahrzeug wieder vorwärts aus der Querparklücke mehr oder weniger weit heraus in den Verkehrsraum gefahren. Je nachdem, wie weit das Fahrzeug mit Beginn des Korrekturzugs bereits in die Querparklücke eingetaucht ist, kann es vorkommen, dass der Fahrer mit Beginn des Korrekturzugs in Vorwärtsrichtung aufgrund der Sichtversperrung durch ein die Querparklücke begrenzendes Fahrzeug keine freie Sicht mehr auf den nachfolgenden Verkehr in dem Verkehrsraum hätte. In diesem Fall würde das Fahrzeug ohne Sicht auf den nachfolgenden Verkehr in den Verkehrsraum fahren; bei einem Parkassistenzsystem mit nur automatischer Querführung erhält der Fahrer hierbei vom System eine Aufforderung (typischerweise über eine Anzeigeeinheit im Fahrzeugcockpit) zum Vorfahren, bei einem Parkassistenzsystem mit automatischer Längsführung würde dieses Vorwärtsfahren in den Verkehrsraum sogar vollautomatisch erfolgen. Typischerweise weisen derartige Systeme keine Sensorik zur rechtzeitigen Erkennung von schnell fahrendem nachfolgendem Querverkehr auf, um den Korrekturzug in Vorwärtsrichtung im Fall einer Kollisionsgefahr mit dem nachfolgenden Querverkehr abzubrechen. Erschwerend kommt hinzu, dass der nachfolgende Verkehr, insbesondere auch Radfahrer, häufig das Herausfahren eines bereits in die Querparklücke eingetauchten Fahrzeugs zu spät bemerken.

Alternativ sind natürlich auch ähnliche Parkassistenzsysteme möglich, bei denen das Fahrzeug vorwärts in die Querparklücke einparkt und etwaige Korrekturzüge statt in Vorwärtsrichtung in Rückrichtung erfolgen. Die vorstehenden Ausführungen zum rückwärtigen Einparken gelten mutatis mutandis auch für Parkassistenzsysteme zum Einparken in Querparklücken in Vorwärtsrichtung.

Es ist Aufgabe der Erfindung, einen automatisierten Einparkvorgang in eine Querparklücke derart zu verbessern, dass ein Unfall mit dem nachfolgenden Verkehr verhindert wird.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zur Unfallvermeidung mit dem nachfolgenden Verkehr bei einem automatisierten Einparkvorgang eines Kraftfahrzeugs mit einem Parkassistenzsystem mit zumindest automatischer Querführung. Das Parkassistenzsystem kann zusätzlich eine automatische Längsführung mit Antriebssteuerung und Steuerung der Fahrtrichtung (Vorwärts- oder Rückwärtsrichtung) umfassen. Zum Einparken erfolgen ein Einparkzug in die Querparklücke in Rückwärts- oder Vorwärtsrichtung und bei Bedarf danach zumindest ein Korrekturzug in Vorwärts- bzw. Rückwärtsrichtung.

Bei dem Verfahren wird festgestellt, dass ein Bedarf für einen Korrekturzug in Vorwärts- bzw. Rückwärtsrichtung besteht. Dies kann bereits bei der Trajektorienplanung vor dem Einparkzug in Rückwärtsrichtung erfolgen. Es kann dazu beispielsweise eine Fahrtrajektorie für den Einparkzug mit einer bestimmten Parkendlage am Ende der Fahrtrajektorie des Einparkzugs bestimmt werden. Die Parkendlage wird dann in Bezug auf das Erfüllen eines oder mehrerer Kriterien für eine zulässige Parkendlage bewertet, z. B. in Bezug auf einen zulässigen Abstand zu den die Querparklücke begrenzenden Fahrzeugen in der Parkendlage und in Bezug auf die Verdrehung zwischen der Fahrzeugausrichtung in der Parkendlage und der Ausrichtung der Parklücke. Hierbei wird dann zum Feststellen eines Bedarfs für einen Korrekturzug festgestellt, dass ein für eine zulässige Parkendlage notwendiges Kriterium nicht erfüllt ist und damit ein Bedarf für einen Korrekturzug besteht.

In Reaktion darauf, dass ein Bedarf für einen Korrekturzug festgestellt wird, wird verhindert, dass das Fahrzeug bei dem Einparkzug so tief in die Querparklücke eintaucht, dass danach der Fahrer mit Beginn des Korrekturzugs in Vorwärts- bzw. Rückwärtsrichtung aufgrund der Sichtversperrung durch ein die Querparklücke begrenzendes Fahrzeug keine freie Sicht mehr auf den nachfolgenden Verkehr hätte. Es kann beispielsweise fortlaufend geprüft werden, ob mit dem Einparkzug in Rückwärtsrichtung zu tief in die Querparklücke eintaucht wird, wenn ein Bedarf für mindestens einen Korrekturzug in Vorwärtsrichtung besteht.

Wenn hingegen festgestellt wird, dass kein Bedarf für einen Korrekturzug besteht, wird das Fahrzeug in die Parklücke auf dem geplanten Einparkzug in Vorwärtsrichtung bzw. Rückwärtsrichtung bis in die vorab geplante Parkendposition eingeparkt (entweder manuell durch entsprechende Anweisungen zur manuellen Längsführung an den Fahrer oder mit automatischer Längsführung).

Um zu verhindern, dass das Fahrzeug bei dem Einparkzug so tief in die Querparklücke eintaucht, dass danach der Fahrer mit Beginn des Korrekturzugs in Vorwärts- bzw. Rückwärtsrichtung aufgrund der Sichtversperrung durch ein die Querparklücke begrenzendes Fahrzeug keine freie Sicht mehr auf den nachfolgenden Verkehr hätte, kann beispielsweise der Einparkzug so frühzeitig beendet werden und ein Richtungswechsel ausgelöst werden, bevor die Position des Fahrers die Sichtlinie überschreitet (entweder manuell durch entsprechende Anweisungen zur manuellen Längsführung an den Fahrer oder mit automatischer Längsführung). Die Sichtlinie wird typischerweise durch die dem Verkehrsraum zugewandte Heck- oder Frontseite eines oder mehrerer die Querparklücke begrenzender Fahrzeuge gebildet.

Dass das Fahrzeug bei dem Einparkzug nicht so tief in die Querparklücke eintaucht, erlaubt es auch, dass der nachfolgende Verkehr das parkende Fahrzeug während des nahezu gesamten Einparkvorgangs bis kurz vor Erreichen der Parkendposition sehen kann; es wird damit verhindert, dass Fahrzeug während des rückwärtigen Einparkzugs für eine kurze Zeit in der Querparklücke verschwindet und für den nachfolgenden Verkehr dabei nicht mehr sichtbar ist.

Bei dem Einparkzug kann es sich beispielsweise um den ersten Einparkzug in Rückwärtsrichtung oder um einen späteren Einparkzug in Rückwärtsrichtung (nachdem bereits vorher ein Korrekturzug in Vorwärtsrichtung durchgeführt wurde) handeln.

Es ist von Vorteil, wenn - während der Einparkzug erfolgt - fortlaufend überwacht wird, wie tief das Fahrzeug bereits in die Parklücke eingetaucht ist. Während der Überwachung wird dann irgendwann festgestellt, dass das Fahrzeug bereits bis zu einer bestimmten ersten Grenze oder weiter als bis zu einer bestimmten ersten Grenze in die Parklücke eingetaucht ist. In Reaktion auf dieses Feststellen, wird eine vorzeitige Beendigung des Einparkzugs und eine Durchführung eines Korrekturzugs in Vorwärts- bzw. Rückwärtsrichtung bewirkt. Das vorzeitige Beenden des Einparkzugs bedeutet, dass die geplante Trajektorie dieses Einparkzugs nicht bis zum geplanten Endpunkt des Einparkzugs durchfahren wird.

Das Parkassistenzsystem kann beispielsweise ein Parkassistenzsystem mit automatischer Querführung, jedoch ohne automatische Längsführung im Sinne einer automatischen Antriebssteuerung und einer automatischen Fahrtrichtungswechselsteuerung sein. Das systemseitige Auslösen einer vorzeitigen Beendigung des Einparkzugs und einer Durchführung eines Korrekturzugs umfasst dann beispielsweise ein Auffordern des Fahrers zum Vorwärtsfahren bzw. Rückwärtsfahren. Die Aufforderung kann beispielsweise optisch über eine Anzeigeeinheit im Fahrzeugcockpit erfolgen. Auf der Anzeigeeinheit wird beispielsweise zum Auslösen einer vorzeitigen Beendigung des Einparkzugs der Hinweis ausgegeben "Bitte vorwärtsfahren". Der Fahrer wird dann bremsen und danach im Stand die Fahrtrichtung wechseln (indem er beispielsweise den Getriebewahlhebel eines Automatikgetriebes von R auf D oder den Getriebewahlhebel eines manuellen Getriebes von R auf den ersten Gang umlegt).

Alternativ handelt es sich beispielsweise um ein Parkassistenzsystem mit automatischer Querführung und automatischer Längsführung (mit automatischer Antriebssteuerung und automatischer Fahrtrichtungswechselsteuerung). Zum vorzeitigen Beendigen des Einparkzugs und Durchführen des Korrekturzugs wird automatisch das Fahrzeug in den Stillstand gebremst, die Fahrtrichtung automatisch gewechselt (indem beispielsweise das Automatikgetriebe von Rückwärtsfahrt auf Vorwärtsfahrt umgeschaltet wird) und der Korrekturzug durch entsprechender Steuerung des Fahrzeugantriebs automatisch durchgeführt.

Bei dem ersten Aspekt der Erfindung wird verhindert, dass das Fahrzeug zu tief in Parklücke eintaucht und der Fahrer dann bei einem nachfolgenden Korrekturzug nicht den Verkehrsraum einsehen kann. Außerdem bleibt das Fahrzeug damit für den nachfolgenden Verkehr während des Einparkvorgangs bis kurz vor Erreichen der Parkendposition sichtbar.

Ein zweiter Aspekt der Erfindung betrifft hingegen den Fall, dass das Fahrzeug bereits zu tief in die Parklücke eingetaucht ist. Es wird hierzu während des Einparkmanövers (während des Einparkzugs in Rückwärts- bzw. Vorwärtsrichtung) fortlaufend überwacht, wie tief das Fahrzeug bereits in die Parklücke eingetaucht ist. Es wird dann irgendwann festgestellt, dass das Fahrzeug bereits bis zu einer bestimmten zweiten Grenze oder weiter als bis zu einer bestimmten zweiten Grenze in die Parklücke eingetaucht ist. Dies bedeutet, dass das Fahrzeug bereits zu tief in die Parklücke eingetaucht ist.

In Reaktion auf diese Feststellung wird ein Korrekturzug in Vorwärts- bzw. Rückwärtsrichtung unterbunden, obwohl eigentlich Bedarf für einen Korrekturzug besteht (da mit dem Einparkzug keine in Bezug auf die vorstehend beschriebenen Kriterien zulässige Parkendlage erreicht werden kann).

Sobald beispielsweise ein Punkt ohne Umkehrmöglichkeit (point of no return) überschritten wurde, wird ein Korrekturzug in Vorwärtsrichtung aus der Parklücke heraus unterbunden. Der Punkt ohne Umkehrmöglichkeit kann beispielsweise einer Sichtlinie in den fließenden Verkehr oder der Sichtlinie zuzüglich eines bestimmten positiven oder negativen Versatzes (z. B. 20 cm oder -20 cm) entsprechen.

Bei einem Parkassistenzsystem mit automatischer Längsführung kann das Unterbinden darin bestehen, dass während des Einparkmanövers kein Korrekturzug aus der Parklücke heraus mehr automatisch durchgeführt wird.

Bei einem Parkassistenzsystem ohne automatische Längsführung hingegen kann das Unterbinden eines Korrekturzugs darin bestehen, dass eine Aufforderung an den Fahrer zum Vorwärtsfahren bzw. Rückwärtsfahren unterbunden wird. Außerdem kann auch ein Warnhinweis an den Fahrer ausgegeben werden.

Der erste und der zweite Aspekt der Erfindung können auch kombiniert werden. In diesem Fall sieht eine bevorzugte Ausführungsform der Erfindung vor, dass die zweite Grenze tiefer in der Parklücke als die erste Grenze liegt (d. h. bei einem Einparkzug in Rückwärts- bzw. Vorwärtsrichtung kann die erste Grenze vor dem Erreichen der zweiten Grenze erreicht werden).

Es wird nachfolgend angenommen, dass das Parkassistenzsystem keine automatische Längsführung aufweist. Gemäß dem ersten Aspekt der Erfindung wird in Reaktion auf das Feststellen, dass das Fahrzeug bereits bis zu einer bestimmten ersten Grenze oder weiter als bis zu einer bestimmten ersten Grenze in die Parklücke eingetaucht ist, der Fahrer zum Vorwärtsfahren bzw. Rückwärtsfahren aufgefordert (d. h. der Einparkzug rückwärts bzw. vorwärts soll vorzeitig beendet werden). Führt der Fahrer hingegen trotz Aufforderung durch das System den Einparkzug fort, kommt der zweite Aspekt der Erfindung zum Tragen: Danach wird nämlich in Reaktion auf das Feststellen, dass das Fahrzeug bei dem Einparkzug bereits bis zu einer bestimmten zweiten Grenze oder weiter als bis zu einer bestimmten zweiten Grenze in die Parklücke eingetaucht ist, die Aufforderung an den Fahrer zum Vorwärtsfahren bzw. Rückwärtsfahren zurückgenommen. Beispielsweise wird bei Überschreiten der ersten Grenze die Aufforderung "Bitte vorwärtsfahren" an den Fahrer ausgegeben. Im Fall des Ignorierens dieser Aufforderung erlischt bei Überschreiten der zweiten Grenze diese Aufforderung wieder. Es könnte stattdessen auch bei Überschreiten der zweiten Grenze direkt eine Aufforderung zum Rückwärtsfahren bzw. Vorwärtsfahren an den Fahrer ausgegeben werden.

Es wäre auch denkbar, wenn nach Rücknahme der Aufforderung an den Fahrer zum Vorwärtsfahren bzw. Rückwärtsfahren für den Fall, dass der Fahrer in Vorwärtsrichtung bzw. Rückwärtsrichtung fährt, die Parkassistenzfunktion (d. h. deren automatische Lenkfunktion) abgebrochen wird, beispielsweise bei Erreichen oder überschreiten der zweiten Grenze in Vorwärtsrichtung bzw. Rückwärtsrichtung. Optional kann dann auch ein Fehlerhinweis an den Fahrer gegeben werden.

Vorstehend wurde in Bezug auf beide Aspekte der Erfindung angegeben, dass das Erfüllen des Kriteriums geprüft wird, dass das Fahrzeug bis zu einer bestimmten Grenze oder weiter als bis zu einer bestimmten Grenze in die Parklücke eingetaucht ist. Im Fall des ersten Aspekts der Erfindung handelt es sich um die erste Grenze und im Fall des zweiten Aspekts der Erfindung handelt es sich um die zweite Grenze. Das Erfüllen dieses Kriteriums entspricht beispielsweise der Situation, wenn ein Referenzpunkt des Fahrzeugs eine Sichtlinie erreicht bzw. überschreitet oder die Sichtlinie mit einem bestimmten (positiven oder negativen) Versatz (z. B. + 20 cm oder -20 cm) überschreitet. Die Sichtlinie wird dabei vorzugsweise durch die dem Verkehrsraum zugewandte Heck- oder Frontseite eines oder mehrerer die Querparklücke begrenzender Fahrzeuge gebildet. Beispielsweise umfasst das Fahrzeug auf jeder Fahrzeugseite eine B-Säule und der Referenzpunkt liegt zwischen den beiden B-Säulen. Es wird dann also geprüft, ob dieser Referenzpunkt zwischen den beiden B-Säulen die Sichtlinie, gegebenenfalls mit einem bestimmten Versatz, erreicht bzw. überschreitet.

Die Erfindung betrifft auch ein Parkassistenzsystem, welches zur Unfallvermeidung mit dem nachfolgenden Verkehr entsprechend dem ersten Aspekt der Erfindung eingerichtet ist: Es ist in der Lage, festzustellen, dass ein Bedarf für einen Korrekturzug in Vorwärts- bzw. Rückwärtsrichtung besteht, und in Reaktion hierauf zu verhindern, dass das Fahrzeug bei dem Einparkzug so tief in die Querparklücke eintaucht, dass danach der Fahrer mit Beginn des Korrekturzugs in Vorwärts- bzw. Rückwärtsrichtung aufgrund der Sichtversperrung durch ein die Querparklücke begrenzendes Fahrzeug keine freie Sicht mehr auf den nachfolgenden Verkehr hätte.

Die vorstehenden Ausführungen zum erfindungsgemäßen Verfahren nach dem ersten Aspekt der Erfindung gelten in entsprechender Weise auch für das vorstehend beschriebene Parkassistenzsystem. An dieser Stelle nicht explizit beschriebene Ausführungsbeispiele des Parkassistenzsystems entsprechen den beschriebenen Ausführungsbeispielen des erfindungsgemäßen Verfahrens nach dem ersten Aspekt der Erfindung.

Die Erfindung betrifft auch ein Parkassistenzsystem, welches zur Unfallvermeidung mit dem nachfolgenden Verkehr entsprechend dem zweiten Aspekt der Erfindung eingerichtet ist: Es ist in der Lage zu überwachen, wie tief das Fahrzeug in die Parklücke eingetaucht ist, und festzustellen, dass das Fahrzeug bereits bis zu einer bestimmten zweiten Grenze oder weiter als bis zu einer bestimmten zweiten Grenze in die Parklücke eingetaucht ist. Es ist darüber hinaus in der Lage, in Reaktion auf diese Feststellung einen Korrekturzug in Vorwärts- bzw. Rückwärtsrichtung trotz Bedarf für einen Korrekturzug zu unterbinden.

Die vorstehenden Ausführungen zum erfindungsgemäßen Verfahren nach dem zweiten Aspekt der Erfindung gelten in entsprechender Weise auch für dieses Parkassistenzsystem. An dieser Stelle nicht explizit beschriebene Ausführungsbeispiele des Parkassistenzsystems entsprechen den beschriebenen Ausführungsbeispielen des erfindungsgemäßen Verfahrens nach dem zweiten Aspekt der Erfindung.

Ein bevorzugtes Ausführungsbeispiel eines erfindungsgemäßen Parkassistenzsystems ist zur Unfallvermeidung mit dem nachfolgenden Verkehr entsprechend der beiden Aspekte der Erfindung eingerichtet, wie dies vorstehend für die beiden Aspekte einzeln beschrieben wurde.

Die Erfindung wird nachfolgend unter Zuhilfenahme der beigefügten Zeichnungen anhand eines Ausführungsbeispiels beschrieben. In diesen zeigen:
- Fig. 1: eine Einparksituation vor Beginn des Einparkvorgangs;
- Fig. 2: ein beispielhaftes Ablaufdiagramm eines erfindungsgemäßen Verfahrens;
- Fig. 3: die Einparksituation zu dem Zeitpunkt, wenn der Referenzpunkt des Fahrzeugs die Sichtlinie überschreitet; und
- Fig. 4: die Einparksituation zu dem Zeitpunkt, wenn der Referenzpunkt des Fahrzeugs die Sichtlinie um eine Strecke Δs überschreitet.

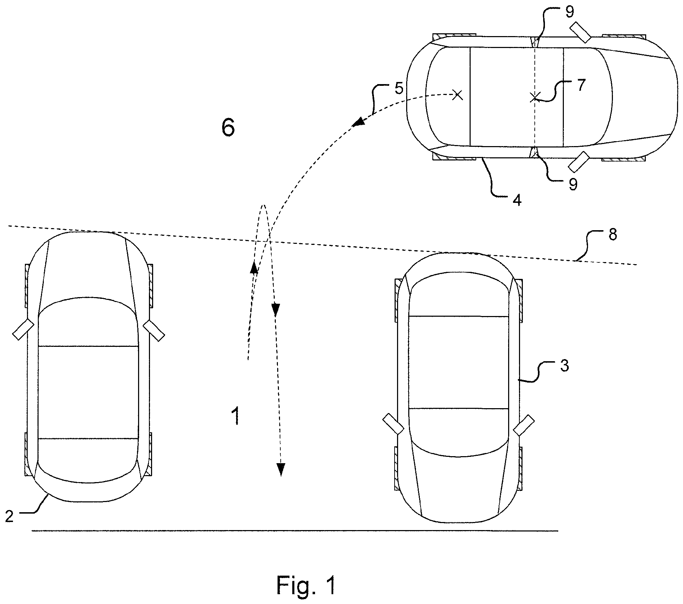

Fig. 1 zeigt eine Einparksituation in eine Querparklücke 1 vor Beginn des Einparkvorgangs bei einem Parkassistenzsystem mit automatischer Querführung (und ohne automatische Längsführung).

Beim langsamen Vorbeifahren an den quer zur Straße 6 parkenden Kraftwagen 2, 3 wird mittels einer Ultraschallsensorik automatisch die Querparklücke 1 zwischen den in Querrichtung parkenden Fahrzeugen 2,3 mittels einer Ultraschallsensorik vermessen.

Nach Halten des eigenen Kraftwagens 4 und Einlegen des Rückwärtsgangs wird die Querparklücke 1, sofern diese zum Einparken geeignet ist, dem Fahrer auf einer Anzeige im Fahrzeugcockpit angezeigt, und der Fahrer kann den Einparkvorgang mit automatischer Querführung in die Querparklücke 1 aktivieren.

Basierend auf der Vermessung der Parklücke wird vor der Durchführung des Einparkmanövers versucht, eine Trajektorie für den ersten Einparkzug zu berechnen, auf der das eigene Fahrzeug 4 rückwärts mit automatischer Querführung in einem einzigen Einparkzug (d. h. ohne Änderung der Fahrtrichtung) in die Querparklücke 1 einparken soll.

Für eine angenommene Endlage des Fahrzeugs 4 am Ende des ersten Einparkzugs wird der Seitenabstand zu den die Parklücke 1 begrenzenden Fahrzeugen 2, 3 berechnet. Außerdem wird für diese Endlage des ersten Einparkzugs die Verdrehung der Ausrichtung des eigenen Fahrzeugs 4 gegenüber der Ausrichtung der Querparklücke 1 bestimmt.

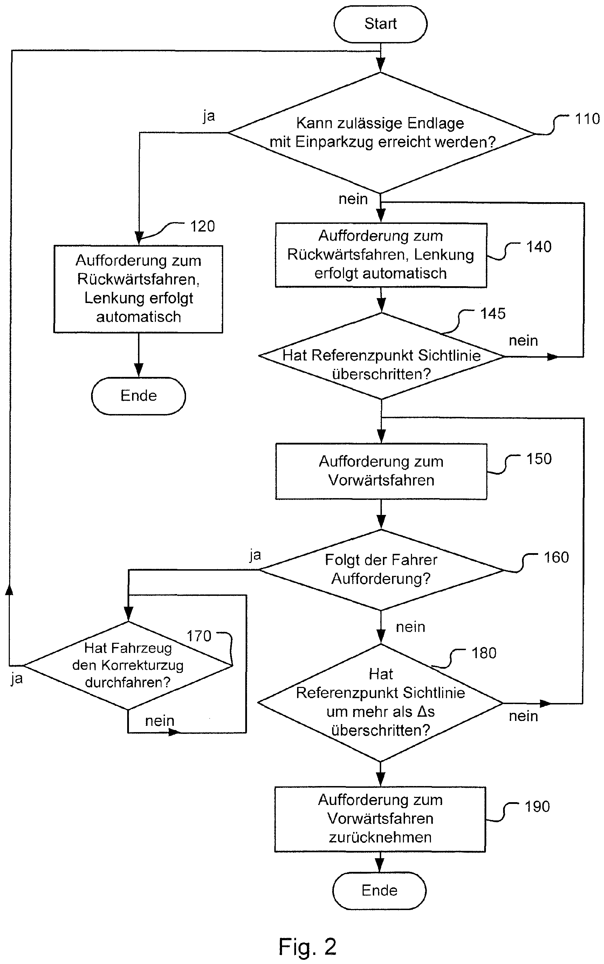

Es wird geprüft, ob die Seitenabstände und die Verdrehung der Ausrichtung des eigenen Fahrzeugs die Kriterien für eine zulässige Endlage erfüllen und damit eine zulässige Endlage mit dem geplanten Einparkzug in Rückwärtsrichtung erreicht werden kann (d.h. besteht dann kein Bedarf für einen Korrekturzug). Diese Prüfung entspricht der Abfrage 110 des in Fig. 2 dargestellten Ablaufdiagramms.

Wenn die Kriterien für eine zulässige Endlage erfüllt sind und damit eine zulässige Endlage mit dem nächsten Einparkzug in Rückwärtsrichtung erreicht werden kann (siehe Alternative "ja" in Fig. 2), sind keine Korrekturzüge in Vorwärtsrichtung notwendig und das Parkmanöver kann in einem einzigen Rückwärtszug durchgeführt werden. Der Fahrer erhält hierbei vom Parksystem den Hinweis das Fahrzeug rückwärts zu bewegen (s. Schritt 120 in Fig. 2); die Lenkung des Fahrzeugs wird dabei vom Parkassistenzsystem automatisch gesteuert. Kurz vor Erreichen der Parkendlage erhält der Fahrer den Hinweis, das Fahrzeug anzuhalten. Nach Anhalten des Fahrzeugs ist dann das Parkmanöver beendet.

Wenn die Kriterien für eine zulässige Endlage nicht erfüllt sind und damit eine zulässige Endlage mit dem nächsten Einparkzug in Rückwärtsrichtung nicht erreicht werden kann (siehe Alternative "nein" in Fig. 2), sind ein oder mehrere Korrekturzüge in Vorwärtsrichtung notwendig, um schließendlich eine zulässige Parkendlage zu erreichen. In diesem Fall handelt es sich also um ein Mehr-Zug-Einparkmanöver mit zumindest einem Korrekturzug nach vorne. In Fig. 1 ist eine beispielhafte Einparktrajektorie 5 eines Mehr-Zug-Einparkmanövers mit einem ersten Einparkzug in Rückwärtsrichtung, einem nachfolgenden Korrekturzug in Vorwärtsrichtung und einem nachfolgenden letzten Einparkzug in Rückwärtsrichtung dargestellt. Der Bezugspunkt für die Trajektorie 5 ist beispielsweise der Mittelpunkt der Hinterachse.

Sofern die Kriterien für ein zulässige Endlage mit dem ersten Einparkzug nicht erfüllt werden können und ein Bedarf für einen oder mehrere Korrekturzüge in Vorwärtsrichtung besteht, wird eine fortlaufende Überwachung aktiviert, bei der fortlaufend überwacht wird, ob ein Referenzpunkt 7 des Fahrzeugs 4 eine Sichtlinie 8 überschritten hat (s. die Abfrage 130). Die Sichtlinie 8 wird durch die der Straße 6 zugewandten Heck- oder Frontseite der beiden die Querparklücke 1 begrenzender Fahrzeuge 2, 3 gebildet (s. hierzu die Sichtlinie 8 in Fig. 1). Beispielsweise entspricht die Sichtlinie 8 der Linie durch die Mittelpunkte der Heck- bzw. Frontseite der beiden Fahrzeuge 2, 3. Der Referenzpunkt 7 entspricht beispielsweise dem Mittelpunkt der Verbindungslinie der beiden B-Säulen 9 des eigenen Fahrzeugs 4.

In Schritt 140 wird der Einparkzug unter fortlaufender Überwachung, ob der Referenzpunkt 7 die Sichtlinie 8 überschritten hat (s. Abfrage 145), durchgeführt. Während des Einparkzugs erhält der Fahrer vom Parkassistenzsystem über eine Anzeigeeinrichtung im Fahrzeugcockpit die Aufforderung, rückwärts zu fahren; die Lenkung wird vom Parkassistenzsystem gesteuert.

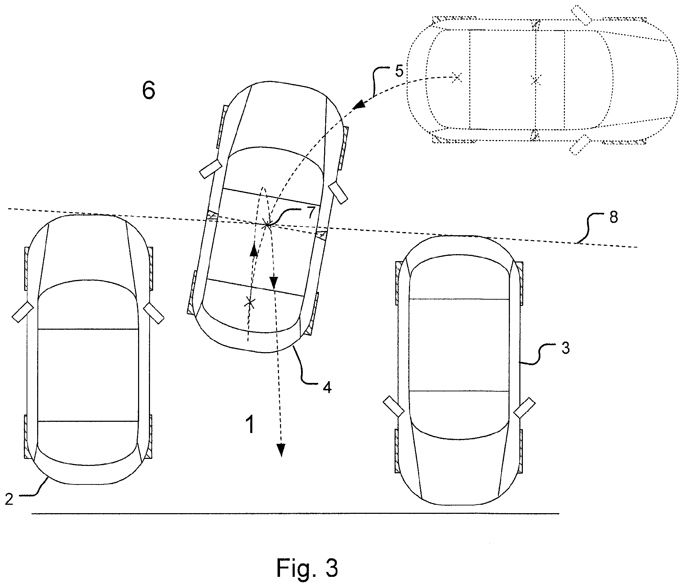

Sofern während des rückwärtigen Einparkzugs festgestellt wird, dass der Referenzpunkt 7 die Sichtlinie 8 überschritten hat (s. Abfrage 145), werden eine vorzeitige Beendigung des Einparkzugs und ein Korrekturzug in Vorwärtsrichtung bewirkt, indem der Fahrer aufgefordert wird, vorwärts zu fahren (s. Schritt 150).In Fig. 3 ist der Zeitpunkt dargestellt, wenn der Referenzpunkt 7 gerade die Sichtlinie 8 überschreitet.

Sofern der Fahrer dieser Aufforderung zum Vorwärtsfahren folgt (s. Abfrage 160), wird die Trajektorie angepasst und in der Abfrage 170 dann geprüft, ob das Fahrzeug den Korrekturzug mit automatischer Lenkung vollständig in Vorwärtsrichtung durchfahren hat. Wenn dies der Fall ist, wird wieder geprüft (s. Abfrage 110), ob mit einem nächsten Einparkzug in Rückwärtsrichtung eine zulässige Parkendlage erreicht werden kann, wie dies vorstehend im Zusammenhang mit dem ersten Einparkzug diskutiert wurde. Wenn dies möglich ist, wird der Fahrer zum Rückwärtsfahren aufgefordert, wobei die Lenkung während des Rückwärtsfahrens automatisch gesteuert wird; eine Überwachung gemäß der Abfrage 140, ob der Referenzpunkt die Sichtlinie überschritten hat, ist dabei nicht mehr aktiv. Andernfalls erfolgt das Rückwärtsfahren unter der fortlaufenden Überwachung, ob der Referenzpunkt 7 die Sichtlinie 8 überschritten hat.

Wenn hingegen in der Abfrage 160 festgestellt wird, dass der Fahrer es unterlässt, das Rückwärtsfahren zu beenden, fährt das Fahrzeug 4 so tief in die Querparklücke 1 ein, dass danach der Fahrer mit Beginn des anschließenden Vorwärtszugs aufgrund der Sichtversperrung durch das Fahrzeug 2 keine freie Sicht mehr auf den nachfolgenden fließenden Verkehr hätte.

Um einen Korrekturzug in Vorwärtsrichtung in einer solchen Situation zu verhindern, wird nun fortlaufend geprüft, ob der Referenzpunkt 7 die Sichtlinie 8 um mehr als eine vorgegebene Strecke Δs (z. B. Δs = 40 cm) überschritten hat (s. Abfrage 180). Ist dies noch nicht der Fall, wird die Aufforderung zum Vorwärtsfahrer weiter aufrecht gehalten. Die Strecke Δs entspricht dabei beispielsweise einer zusätzlichen Wegstrecke entlang der gefahrenen Trajektorie, nachdem die Sichtlinie 8 überschritten wurde.

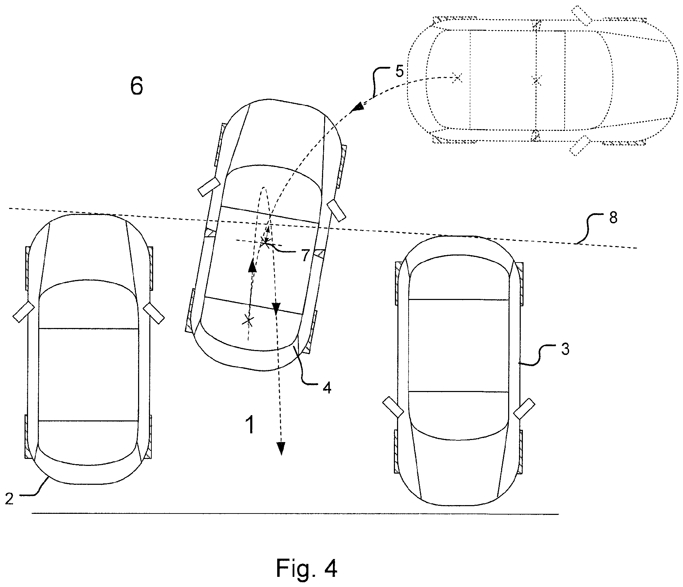

In Fig. 4 ist die Situation dargestellt, wenn der Referenzpunkt 7 gerade die Sichtlinie 8 um die vorgegebene Strecke Δs überschreitet.

Sofern der Referenzpunkt 7 die Sichtlinie 8 um die vorgegebene Strecke Δs überschritten hat, soll ein Korrekturzug in Vorwärtsrichtung unterbunden werden, obwohl mit dem aktuell gefahrenen Rückwärtszug keine zulässige Parkendlage erreicht werden kann. Aus diesem Grund wird dann die bisherige Aufforderung zum Vorwärtsfahren zurückgenommen (s. Schritt 190), indem die Aufforderung zum Vorwärtsfahren nicht mehr angezeigt wird.

## Patentansprüche

1. Verfahren zur Unfallvermeidung mit dem nachfolgenden Verkehr bei einem automatisierten Einparkvorgang in eine Querparklücke (1) eines Kraftfahrzeugs (4) mit einem Parkassistenzsystem mit zumindest automatischer Querführung, wobei der automatisierte Einparkvorgang einen Einparkzug in die Querparklücke in Rückwärts- oder Vorwärtsrichtung umfasst, **dadurch gekennzeichnet, dass** der automatisierte Einparkvorgang bei Bedarf danach zumindest einen Korrekturzug in Vorwärts- bzw. Rückwärtsrichtung umfasst, mit den Schritten:
- Feststellen (110) seitens des Parkassistenzsystems, dass ein Bedarf für einen Korrekturzug in Vorwärts- bzw. Rückwärtsrichtung im Rahmen des automatisierten Einparkvorgangs besteht; und
- in Reaktion hierauf, Verhindern (145, 150) seitens des Parkassistenzsystems, dass das Fahrzeug (4) bei dem Einparkzug im Rahmen des automatisierten Einparkvorgangs so tief in die Querparklücke (1) eintaucht, dass danach der Fahrer mit Beginn des Korrekturzugs in Vorwärts- bzw. Rückwärtsrichtung aufgrund der Sichtversperrung durch ein die Querparklücke begrenzendes Fahrzeug (2) keine freie Sicht mehr auf den nachfolgenden Verkehr hätte.

2. Verfahren nach Anspruch 1, wobei der Schritt des Feststellens (110) eines Bedarfs für einen Korrekturzug in Vorwärts- bzw. Rückwärtsrichtung umfasst:
- vor dem Einparkzug, Bestimmen einer Fahrtrajektorie für den Einparkzug mit einer bestimmten Parkendlage am Ende der Fahrtrajektorie des Einparkzugs; und
- Bewerten der Parkendlage in Bezug auf das Erfüllen eines oder mehrerer Kriterien für eine zulässige Parkendlage und Feststellen, dass zumindest ein für eine zulässige Parkendlage notwendiges Kriterium nicht erfüllt ist.

3. Verfahren nach einem der vorhergehenden Ansprüche, wobei der Schritt des Verhinderns (145, 150) den Schritt umfasst:
- Bewirken einer Beendigung des Einparkzugs in Rückwärtsrichtung, bevor die Position des Fahrers die Sichtlinie überschreitet.

4. Verfahren nach einem der vorhergehenden Ansprüche, wobei der Schritt des Verhinderns die Schritte umfasst:
- während der Einparkzug erfolgt, Überwachen (145), wie tief das Fahrzeug bereits in die Parklücke eingetaucht ist, und Feststellen, dass das Fahrzeug bereits bis zu einer bestimmten Grenze oder weiter als bis zu einer bestimmten Grenze in die Parklücke eingetaucht ist; und
- in Reaktion auf dieses Feststellen, Bewirken (150) einer vorzeitigen Beendigung des Einparkzugs und einer Durchführung eines Korrekturzugs in Vorwärts- bzw. Rückwärtsrichtung.

5. Verfahren nach Anspruch 4, wobei
- das Parkassistenzsystem ein Parkassistenzsystem mit automatischer Querführung, jedoch ohne automatische Längsführung mit automatischer Antriebssteuerung und automatischer Fahrtrichtungswechselsteuerung ist, und
- der Schritt des Bewirkens (150) einer vorzeitigen Beendigung des Einparkzugs und einer Durchführung eines Korrekturzugs umfasst:
Auffordern des Fahrers zum Vorwärtsfahren bzw. Rückwärtsfahren.

6. Verfahren nach Anspruch 4, wobei
- das Parkassistenzsystem ein Parkassistenzsystem mit automatischer Querführung und automatischer Längsführung mit automatischer Antriebssteuerung und automatischer Fahrtrichtungswechselsteuerung ist, und
- der Schritt des Bewirkens einer vorzeitigen Beendigung des Einparkzugs und einer Durchführung eines Korrekturzugs umfasst:
automatisches Auslösen eines Fahrtrichtungswechsels und automatisches Durchführen des Korrekturzugs.

7. Verfahren zur Unfallvermeidung mit dem nachfolgenden Verkehr bei einem automatisierten Einparkvorgang in eine Querparklücke (1) eines Kraftfahrzeugs (4) mit einem Parkassistenzsystem mit zumindest automatischer Querführung, wobei der automatisierte Einparkvorgang einen Einparkzug in die Querparklücke in Rückwärts- oder Vorwärtsrichtung umfasst, **dadurch gekennzeichnet, dass** der automatisierte Einparkvorgang bei Bedarf danach zumindest einen Korrekturzug in Vorwärts- bzw. Rückwärtsrichtung umfasst, mit den Schritten:
- Überwachen (180) seitens des Parkassistenzsystems, wie tief das Fahrzeug (4) bei dem Einparkzug im Rahmen des automatisierten Einparkvorgangs bereits in die Parklücke (1) eingetaucht ist, und Feststellen seitens des Parkassistenzsystems, dass das Fahrzeug bereits bis zu einer bestimmten Grenze oder weiter als bis zu einer bestimmten Grenze in die Parklücke eingetaucht ist; und
- in Reaktion auf das Feststellen, Unterbinden (190) seitens des Parkassistenzsystems eines Korrekturzugs in Vorwärts- bzw. Rückwärtsrichtung trotz Bedarf für einen Korrekturzug.

8. Verfahren nach Anspruch 7, wobei
- das Parkassistenzsystem ein Parkassistenzsystem mit automatischer Querführung, jedoch ohne automatische Längsführung mit automatischer Antriebssteuerung und automatischer Fahrtrichtungswechselsteuerung ist, und
- der Schritt des Unterbindens (190) eines Korrekturzugs umfasst:
Unterbinden einer Aufforderung an den Fahrer zum Vorwärtsfahren bzw. Rückwärtsfahren.

9. Verfahren nach Anspruch 5 und Anspruch 8, wobei
- die Grenze gemäß Anspruch 7 tiefer in der Parklücke (1) als die Grenze gemäß Anspruch 4 liegt,
- in Reaktion auf das Feststellen, dass das Fahrzeug (4) bereits bis zu der bestimmten Grenze gemäß Anspruch 4 oder weiter als bis zu der bestimmten Grenze gemäß Anspruch 4 in die Parklücke (1) eingetaucht ist, der Fahrer zum Vorwärtsfahren bzw. Rückwärtsfahren aufgefordert wird (150),
- danach in Reaktion auf das Feststellen, dass das Fahrzeug bei dem Einparkzug bereits bis zu der bestimmten Grenze gemäß Anspruch 7 oder weiter als bis zu der bestimmten Grenze gemäß Anspruch 7 in die Parklücke eingetaucht ist, die Aufforderung an den Fahrer zum Vorwärtsfahren bzw. Rückwärtsfahren zurückgenommen wird (190).

10. Verfahren nach Anspruch 9, wobei nach der Rücknahme der Aufforderung an den Fahrer zum Vorwärtsfahren bzw. Rückwärtsfahren bei Fahrt in Vorwärtsrichtung bzw. Rückwärtsrichtung die Parkassistenzfunktion abgebrochen wird, optional mit einem Fehlerhinweis an den Fahrer.

11. Verfahren nach einem der vorhergehenden Ansprüche 4 bis 10, wobei
- der Einparkvorgang aus einem Verkehrsraum (6) in die Querparklücke (1) erfolgt, und
- das Fahrzeug bis zu einer bestimmten Grenze oder weiter als bis zu einer bestimmten Grenze in die Parklücke eingetaucht ist, wenn ein Referenzpunkt (7) des Fahrzeugs eine Sichtlinie (8) erreicht bzw. überschreitet oder die Sichtlinie (8) mit einem bestimmten Versatz erreicht bzw. überschreitet, wobei die Sichtlinie (8) durch die dem Verkehrsraum jeweils zugewandte Heck- oder Frontseite eines oder mehrerer die Querparklücke (1) begrenzender Fahrzeuge (2, 3) gebildet wird.

12. Verfahren nach Anspruch 11, wobei das parkende Fahrzeug (4) auf jeder Fahrzeugseite eine B-Säule (9) umfasst und der Referenzpunkt (7) zwischen den beiden B-Säulen (9) liegt.

13. Parkassistenzsystem für ein Kraftfahrzeug mit zumindest automatischer Querführung zur Durchführung eines automatisierten Einparkvorgangs in eine Querparklücke (1), wobei der automatisierte Einparkvorgang einen Einparkzug in die Querparklücke (1) in Rückwärts- oder Vorwärtsrichtung umfasst, **dadurch gekennzeichnet, dass** der automatisierte Einparkvorgang bei Bedarf danach zumindest einen Korrekturzug in Vorwärts- bzw. Rückwärtsrichtung umfasst, wobei das Parkassistenzsystem zur Unfallvermeidung mit dem nachfolgenden Verkehr eingerichtet ist,
- Festzustellen (110), dass ein Bedarf für einen Korrekturzug in Vorwärts- bzw. Rückwärtsrichtung im Rahmen des automatisierten Einparkvorgangs besteht, und
- in Reaktion hierauf zu verhindern (145, 150), dass das Fahrzeug bei dem Einparkzug im Rahmen des automatisierten Einparkvorgangs so tief in die Querparklücke (1) eintaucht, dass danach der Fahrer mit Beginn des Korrekturzugs in Vorwärts- bzw. Rückwärtsrichtung aufgrund der Sichtversperrung durch ein die Querparklücke (1) begrenzendes Fahrzeug (2) keine freie Sicht mehr auf den nachfolgenden Verkehr hätte.

14. Parkassistenzsystem für ein Kraftfahrzeug mit zumindest automatischer Querführung zur Durchführung eines automatisierten Einparkvorgangs in eine Querparklücke (1), wobei der automatisierte Einparkvorgang einen Einparkzug in die Querparklücke in Rückwärts- oder Vorwärtsrichtung umfasst, **dadurch gekennzeichnet, dass** der automatisierte Einparkvorgang bei Bedarf danach zumindest einen Korrekturzug in Vorwärts- bzw. Rückwärtsrichtung umfasst, wobei das Parkassistenzsystem zur Unfallvermeidung mit dem nachfolgenden Verkehr eingerichtet ist,
- zu überwachen (180), wie tief das Fahrzeug (4) bei dem Einparkzug im Rahmen des automatisierten Einparkvorgang in die Parklücke eingetaucht ist, und festzustellen, dass das Fahrzeug bereits bis zu einer bestimmten Grenze oder weiter als bis zu einer bestimmten Grenze in die Parklücke eingetaucht ist, und
- in Reaktion auf diese Feststellung einen Korrekturzug in Vorwärts- bzw. Rückwärtsrichtung trotz Bedarf für einen Korrekturzug zu unterbinden (190).

## Claims

1. A method for avoiding accidents with following traffic during an automated parking procedure into a transverse parking space (1) for a motor vehicle (4) equipped with a parking assistance system having at least automatic transverse guidance, wherein the automated parking procedure comprises a parking movement into the transverse parking space in a reverse or forward direction, **characterised in that,** when required, the automated parking procedure then comprises at least one corrective movement in a forward or reverse direction, the method comprising the following steps:
- by means of the parking assistance system, determining (110) that there is a need for a corrective movement in a forward or reverse direction within the scope of the automated parking procedure; and
- in response thereto and by means of the parking assistance system, preventing (145, 150) the vehicle (4) from entering the transverse parking space (1) to such a depth during the parking movement within the scope of the automated parking procedure that the driver would subsequently, at the beginning of the corrective movement in a forward or reverse direction, no longer have a clear view of the following traffic on account of a visual obstruction by a vehicle (2) bounding the transverse parking space.

2. A method according to claim 1, wherein the step of determining (110) the need for a corrective movement in a forward or reverse direction comprises the following steps:
- prior to the parking movement, determining a trajectory of travel for the parking movement with a particular parking end position at the end of the trajectory of travel of the parking movement; and
- assessing the parking end position in relation to one or more criteria for an admissible parking end position being satisfied and determining that at least one criterion necessary for an admissible parking end position is not satisfied.

3. A method according to any one of the preceding claims, wherein the step of preventing (145, 150) comprises the following step:
- causing termination of the parking movement in a reverse direction before the position of the driver crosses the line of sight.

4. A method according to any one of the preceding claims, wherein the step of preventing comprises the following steps:
- while the parking movement is taking place, monitoring (145) to what depth the vehicle has already entered the parking space and determining that the vehicle has already entered the parking space to a particular limit or beyond a particular limit; and
- in response to this determination, causing (150) premature termination of the parking movement and execution of a corrective movement in a forward or reverse direction.

5. A method according to claim 4, wherein
- the parking assistance system is a parking assistance system having automatic transverse guidance, but without automatic longitudinal guidance with automatic drive control and automatic control of direction-of-travel changes, and
- the step of causing (150) premature termination of the parking movement and execution of a corrective movement comprises:
asking the driver to travel forward or to reverse.

6. A method according to claim 4, wherein
- the parking assistance system is a parking assistance system having automatic transverse guidance and automatic longitudinal guidance with automatic drive control and automatic control of direction-of-travel changes, and
- the step of causing premature termination of the parking movement and execution of a corrective movement comprises:
automatically triggering a change of direction of travel and automatically executing the corrective movement.

7. A method for avoiding accidents with following traffic during an automated parking procedure into a transverse parking space (1) for a motor vehicle (4) equipped with a parking assistance system having at least automatic transverse guidance, wherein the automated parking procedure comprises a parking movement into the transverse parking space in a reverse or forward direction, **characterised in that,** when required, the automated parking procedure then comprises at least one corrective movement in a forward or reverse direction, the method comprising the following steps:
- by means of the parking assistance system, monitoring (180) to what depth the vehicle (4) has already entered the parking space (1) during the parking movement within the scope of the automated parking procedure, and, by means of the parking assistance system, determining that the vehicle has already entered the parking space to a particular limit or beyond a particular limit; and
- in response to this determination and by means of the parking assistance system, preventing (190) a corrective movement in a forward or reverse direction despite a need for the corrective movement.

8. A method according to claim 7, wherein
- the parking assistance system is a parking assistance system having automatic transverse guidance, but without automatic longitudinal guidance with automatic drive control and automatic control of direction-of-travel changes, and
- the step of preventing (190) a corrective movement comprises:
preventing a request asking the driver to travel forward or to reverse.

9. A method according to claim 5 and claim 8, wherein
- the limit according to claim 7 is situated deeper in the parking space (1) than the limit according to claim 4,
- in response to the determination that the vehicle (4) has already entered the parking space (1) to the particular limit according to claim 4 or beyond the particular limit according to claim 4, the driver is asked (150) to travel forward or to reverse,
- subsequently, in response to the determination that the vehicle has already entered the parking space to the particular limit according to claim 7 or beyond the particular limit according to claim 7 during the parking movement, the request asking the driver to travel forward or to reverse is withdrawn (190).

10. A method according to claim 9, wherein, following withdrawal of the request asking the driver to travel forward or to reverse, upon travel in a forward direction or reverse direction the parking assistance function is aborted, optionally with an error notification to the driver.

11. A method according to any one of preceding claims 4 to 10, wherein
- the parking procedure is performed from a traffic area (6) into the transverse parking space (1), and
- the vehicle has entered the parking space to a particular limit or beyond a particular limit when a reference point (7) on the vehicle reaches or crosses a line of sight (8) or reaches or crosses the line of sight (8) with a particular offset, wherein the line of sight (8) is formed by a rear or front end, in either case facing the traffic area, of one or more vehicles (2, 3) bounding the transverse parking space (1).

12. A method according to claim 11, wherein the parking vehicle (4) comprises a B pillar (9) on each vehicle side and the reference point (7) is situated between the two B pillars (9).

13. A parking assistance system for a motor vehicle having at least automatic transverse guidance for performing an automated parking procedure into a transverse parking space (1), wherein the automated parking procedure comprises a parking movement into the transverse parking space (1) in a reverse or forward direction, **characterised in that** the automated parking procedure, when required, subsequently comprises at least one corrective movement in a forward or reverse direction, wherein the parking assistance system, in order to avoid accidents with following traffic, is designed to:
- determine (110) a need for a corrective movement in a forward or reverse direction within the scope of the automated parking procedure, and
- in response thereto, to prevent (145, 150) the vehicle from entering the transverse parking space (1) to such a depth during the parking movement within the scope of the automated parking procedure that the driver would subsequently, at the beginning of the corrective movement in a forward or reverse direction, no longer have a clear view of the following traffic on account of visual obstruction by a vehicle (2) bounding the transverse parking space (1).

14. A parking assistance system for a motor vehicle having at least automatic transverse guidance for performing an automated parking procedure into a transverse parking space (1), wherein the automated parking procedure comprises a parking movement into the transverse parking space in a reverse or forward direction, **characterised in that** the automated parking procedure, when required, subsequently comprises at least one corrective movement in a forward or reverse direction, wherein the parking assistance system, in order to avoid accidents with the following traffic, is designed to:
- monitor (180) to what depth the vehicle (4) has entered the parking space during the parking movement within the scope of the automated parking procedure, and to determine that the vehicle has already entered the parking space to a particular limit or beyond a particular limit, and
- in response to this determination, to prevent (190) a corrective movement in a forward or reverse direction despite the need for a corrective movement.

## Revendications

1. Procédé permettant d'empêcher des accidents avec les véhicules qui suivent lors d'une opération de stationnement automatisée dans un emplacement de stationnement en épi (1) d'un véhicule (4) ayant un système d'assistance au stationnement avec au moins un guidage transversal automatique, l'opération de stationnement automatisée comprenant un mouvement de stationnement dans l'emplacement de stationnement en épi vers l'arrière ou vers l'avant,
**caractérisé en ce que**
l'opération de stationnement automatisée comporte ensuite, en cas de besoin, au moins un mouvement de correction vers l'avant ou vers l'arrière comprenant des étapes consistant à :
- déterminer (110) côté système d'assistance au stationnement l'existence d'un besoin d'un mouvement de correction vers l'avant ou vers l'arrière dans le cadre de l'opération de stationnement automatisée, et
- en réaction, empêcher (145, 150) côté système d'assistance en stationnement, que lors du mouvement de stationnement, dans le cadre de l'opération de stationnement automatisée, le véhicule (4) pénètre suffisamment profondément dans l'emplacement de stationnement en épi (1), pour qu'ensuite, au début du mouvement de correction vers l'avant ou vers l'arrière, le conducteur ne puisse plus en raison d'un blocage de sa visibilité par un véhicule (2) limitant l'emplacement de stationnement en épi, de voir librement les véhicules qui suivent.

2. Procédé conforme à la revendication 1,
selon lequel l'étape consistant à déterminer (110) l'existence d'un besoin d'un mouvement de correction vers l'avant ou vers l'arrière comprend des étapes consistant :
- avant le mouvement de stationnement à déterminer une trajectoire pour le mouvement de stationnement avec une position de stationnement finale déterminée à la fin de la trajectoire du mouvement de stationnement, et
- à évaluer la position de stationnement finale concernant la satisfaction à au moins un critère pour obtenir une position de stationnement admissible et à déterminer qu'au moins un critère nécessaire pour obtenir une position de stationnement finale admissible n'est pas rempli.

3. Procédé conforme à l'une des revendications précédentes,
selon lequel l'étape d'empêchement (145, 150) comprend une étape consistant à :
achever le moment de stationnement vers l'arrière avant que la position du conducteur ne dépasse sa ligne de visibilité.

4. Procédé conforme à l'une des revendications précédentes,
selon lequel l'étape d'empêchement comprend des étapes consistant :
- pendant le mouvement de stationnement à surveiller (145) à quelle profondeur le véhicule a déjà pénétré dans l'emplacement de stationnement et à déterminer que le véhicule a déjà pénétré dans l'emplacement de stationnement jusqu'à une limite déterminée ou au-delà d'une limite déterminée, et
- en réaction à cette détermination, à effectuer (150) un achèvement prématuré du mouvement de stationnement et à mettre en oeuvre un mouvement de correction vers l'avant ou vers l'arrière.

5. Procédé conforme à la revendication 4,
selon lequel :
- le système d'assistance au stationnement est un système d'assistance au stationnement ayant un guidage transversal automatique, toutefois sans guidage longitudinal automatique avec une commande d'entraînement automatique et une commande de changement de la direction de déplacement automatique, et
- l'étape consistant à effectuer (150) un achèvement prématuré du mouvement de stationnement et la mise en oeuvre d'un mouvement de correction comprend :
une invitation du conducteur à un déplacement vers l'avant ou vers l'arrière.

6. Procédé conforme à la revendication 4,
selon lequel :
le système d'assistance au stationnement est un système d'assistance au stationnement ayant un guidage transversal automatique et un guidage longitudinal automatique avec une commande d'entraînement automatique et une commande de changement de la direction de déplacement automatique, et
l'étape consistant à effectuer un achèvement prématuré du mouvement de stationnement et la mise en oeuvre d'un mouvement de correction comprend un déclenchement automatique d'un changement de la direction de déplacement et la mise en oeuvre automatique du mouvement de correction.

7. Procédé permettant d'empêcher des accidents avec les véhicules qui suivent lors d'une opération de stationnement automatisée dans un emplacement de stationnement en épi (1) d'un véhicule (4) ayant un système d'assistance au stationnement avec au moins un guidage transversal automatique, l'opération de stationnement automatisée comprenant un mouvement de stationnement dans l'emplacement de stationnement en épi vers l'arrière ou vers l'avant,
**caractérisé en ce que**
l'opération de stationnement automatisée comprend ensuite, en cas de besoin, au moins un mouvement de correction vers l'avant ou vers l'arrière, comprenant les étapes suivantes consistant à :
- surveiller (180) côté système d'assistance au stationnement à quelle profondeur le véhicule (4) a déjà pénétré dans l'emplacement de stationnement (1) lors du mouvement de stationnement dans le cadre de l'opération de stationnement automatisée, et déterminer côté système d'assistance au stationnement que le véhicule a déjà pénétré dans l'emplacement de stationnement jusqu'à une limite déterminée ou au-delà d'une limite déterminée, et
- en réaction à cette détermination, empêcher (190) côté système d'assistance au stationnement une section de correction vers l'avant ou vers l'arrière malgré le besoin d'un mouvement de correction.

8. Procédé conforme à la revendication 7,
selon lequel :
- le système d'assistance au stationnement est un système d'assistance au stationnement avec un guidage transversal automatique mais sans guidage longitudinal automatique avec une commande d'entraînement automatique et une commande de changement de la direction de déplacement automatique, et
- l'étape d'empêchement (190) d'un mouvement de correction comporte l'empêchement d'une invitation du conducteur à un déplacement vers l'avant ou vers l'arrière.

9. Procédé conforme à la revendication 5 et à la revendication 8,
selon lequel :
- la limite conforme à la revendication 7 est située plus profondément dans l'emplacement de stationnement (1) que la limite conforme à la revendication 4,
- en réaction à la détermination que le véhicule (4) a déjà pénétré dans l'emplacement de stationnement (1) jusqu'à la limite déterminée conforme à la revendication 4 ou au-delà de la limite déterminée conforme à la revendication 4, on invite le conducteur à se déplacer vers l'avant ou vers l'arrière (150),
- puis, en réaction à la détermination que, lors du mouvement de stationnement, le véhicule a déjà pénétré dans l'emplacement de stationnement jusqu'à la limite déterminée conformément à la revendication 7 ou au-delà de la limite déterminée conformément à la revendication 7, on retire l'invitation du conducteur à se déplacer vers l'avant ou vers l'arrière (190).

10. Procédé conforme à la revendication 9,
selon lequel après le retrait de l'invitation du conducteur à se déplacer vers l'avant ou vers l'arrière, lors d'un déplacement vers l'avant ou vers l'arrière, la fonction d'assistance au stationnement est annulée, le cas échéant avec une indication d'erreur au conducteur.

11. Procédé conforme à l'une des revendications précédentes 4 à 10, selon lequel :
- l'opération de stationnement dans l'emplacement de stationnement en épi (1) est effectuée à partir d'un espace de circulation (6), et
- le véhicule a pénétré dans l'emplacement de stationnement jusqu'à une limite définie ou au-delà d'une limite définie lorsqu'un point de référence (7) du véhicule atteint ou dépasse une ligne de visibilité (8) ou atteint, ou dépasse la ligne de visibilité (8) avec un décalage défini, la ligne de visibilité (8) étant formée par le côté arrière ou le côté frontal respectivement tourné vers l'espace de circulation d'au moins un véhicule (2, 3) limitant l'emplacement de stationnement en épi (1).

12. Procédé conforme à la revendication 11,
selon lequel le véhicule en cours de stationnement (4) comporte de chaque côté, une colonne B (9) et le point de référence (7) est situé entre les deux colonnes B (9).

13. Système d'assistance au stationnement destiné à un véhicule avec au moins un guidage transversal automatique permettant d'effectuer d'une opération de stationnement automatisée dans un emplacement de stationnement en épi (1), l'opération de stationnement automatisée comprenant un mouvement de stationnement dans l'emplacement de stationnement en épi (1) vers l'arrière ou vers l'avant,
**caractérisé en ce qu'**
en cas de besoin, l'opération de stationnement automatisée comporte ensuite au moins un mouvement de correction vers l'avant ou vers l'arrière, le système d'assistance au stationnement étant réalisé pour empêcher un accident avec les véhicules qui suivent, en mettant en oeuvre des étapes consistant à :
- déterminer (110) l'existence d'un besoin d'un mouvement de correction vers l'avant ou vers l'arrière dans le cadre de l'opération de stationnement automatisée, et
- en réaction, empêcher (145, 150) que, lors du déplacement de stationnement automatisé, dans le cadre de l'opération de stationnement automatisé, le véhicule pénètre suffisamment profondément dans l'emplacement de stationnement en épi (1), pour qu'ensuite, au début du mouvement de correction vers l'avant ou vers l'arrière, le conducteur ne puisse plus en raison d'un blocage de sa visibilité par un véhicule (2) limitant l'emplacement de stationnement en épi (1) voir librement les véhicules qui suivent.

14. Système d'assistance au stationnement destiné à un véhicule avec au moins un guidage transversal automatique permettent de mettre en oeuvre une opération de stationnement automatisée dans un emplacement de stationnement en épi (1), l'opération de stationnement automatisée comprenant un mouvement de stationnement dans l'emplacement de stationnement en épi vers l'arrière ou vers l'avant,
**caractérisé en ce qu'**
en cas de besoin, l'opération de stationnement automatisée comporte ensuite au moins un mouvement de correction vers l'avant ou vers l'arrière, le système d'assistance au stationnement étant réalisé, de façon à permettre d'empêcher un accident avec les véhicules qui suivent,
- pour surveiller (180) à quelle profondeur le véhicule (4) a déjà pénétré dans l'emplacement de stationnement lors du mouvement de stationnement dans le cadre de l'opération de stationnement automatisée, et déterminer que le véhicule a déjà pénétré dans l'emplacement de stationnement jusqu'à une limite déterminée, ou au-delà d'une limite déterminée, et
- en réaction à cette détermination pour empêcher un mouvement de correction vers l'avant ou vers l'arrière malgré le besoin d'un mouvement de correction (190).
